# EUROPEAN PATENT APPLICATION

(11) **EP 4 831 702 A1**
(43) Date of publication of application: **28.10.2026**
(21) Application number: 24907207.5
(22) Date of filing: 06.12.2024
(51) Int. Cl.: G02B 6/255

(54) **FUSION SPLICER AND FUSION SPLICING METHOD**

(30) Priority: 18.12.2023 JP 2023213052
(71) Applicant: Sumitomo Electric Industries, Ltd., Osaka-shi, Osaka 541-0041 (JP)
(72) Inventor: KUNIEDA Orie, Osaka-shi, Osaka 541-0041 (JP); MOURI Shintaro, Osaka-shi, Osaka 541-0041 (JP); KIMURA Akinori, Osaka-shi, Osaka 541-0041 (JP); ENDO Soichi, Osaka-shi, Osaka 541-0041 (JP)
(74) Representative: Müller-Boré & Partner Patentanwälte PartG mbB
(86) International application number: PCT/JP2024/043283
(87) International publication number: WO 2025/134821

(57) **Abstract**

A fusion splicer according to one embodiment is a fusion splicer that fusion-splices an optical fiber. The fusion splicer includes a light source that irradiates the optical fiber with light; a camera that receives the light, which is emitted from the light source, passes through the optical fiber, and is emitted from an end face of the optical fiber, to capture an image of the end face; and a core detection unit that detects a core of the optical fiber from the image of the end face captured by the camera. The camera captures an image of the end face with a focus position of the camera set at a portion of the optical fiber inward from the end face.

## Description

### Technical Field

The present disclosure relates to a fusion splicer and a fusion splicing method.

Priority is claimed on Japanese Patent Application No. 2023-213052, filed on December 18, 2023, the entire content of which is incorporated herein by reference.

### Background Art

Patent Literature 1 discloses a splicing device for optical fibers. The splicing device includes a first drive unit that moves each of two photonic crystal fibers (PCFs); a second drive unit that moves a mirror located between the two PCFs; a camera that captures an image reflected in the mirror; and an image processing device that performs image processing on the image from the camera. End faces of the PCFs are observed using the mirror and the camera, and the positions of the two PCFs are adjusted according to the observed images.

Patent Literature 2 discloses a method for splicing a multicore fiber. In this splicing method, the multicore fiber is disposed so as to face an object to be spliced, and then an end face of the multicore fiber is confirmed to identify the position of a marker portion of the multicore fiber. The positions of the core portions of the multicore fiber are aligned.

Patent Literature 3 discloses a fusion splicer. The fusion splicer includes an optical fiber holder for holding an optical fiber; a rotation mechanism for rotating the optical fiber; a bending unit that bends the optical fiber; a light source that causes light to be incident on the optical fiber from a side; and a power supply unit that supplies power to the light source. The bending unit and the light source are disposed at any one of the following positions: a distal end side of the optical fiber relative to the optical fiber holder, the optical fiber holder, and the rotation mechanism.

### Citation List

### Patent Literature

Patent Literature 1: Japanese Unexamined Patent Publication No. 2004-53625
Patent Literature 2: Japanese Unexamined Patent Publication No. 2013-50695
Patent Literature 3: PCT International Publication No. WO 2022/244843

### Summary of Invention

A fusion splicer according to the present disclosure fusion-splices an optical fiber. The fusion splicer includes a light source that irradiates the optical fiber with light; a camera that receives the light, which is emitted from the light source, passes through the optical fiber, and is emitted from an end face of the optical fiber, to capture an image of the end face; and a core detection unit that detects a core of the optical fiber from the image of the end face captured by the camera. The camera captures an image of the end face with a focus position of the camera set at a portion of the optical fiber inward from the end face.

### Brief Description of Drawings

[FIG. 1] FIG. 1 is a perspective view illustrating a fusion splicer according to an embodiment.
[FIG. 2] FIG. 2 is a perspective view illustrating an internal structure of the fusion splicer according to the embodiment.
[FIG. 3] FIG. 3 is a perspective view illustrating rotation mechanisms, optical fiber holders, and electrodes of the fusion splicer according to the embodiment.
[FIG. 4] FIG. 4 is a diagram schematically illustrating an image observation mechanism of the fusion splicer according to the embodiment.
[FIG. 5] FIG. 5 is a block diagram for explaining the functions of the fusion splicer according to the embodiment.
[FIG. 6] FIG. 6 is a diagram schematically illustrating an image captured with the focus position of a camera of the fusion splicer according to the embodiment aligned with an end face of an optical fiber.
[FIG. 7] FIG. 7 is a diagram schematically illustrating an image captured with the focus position of the camera of the fusion splicer according to the embodiment aligned with a portion of the optical fiber inward from the end face of the optical fiber.
[FIG. 8] FIG. 8 is a flowchart illustrating an example of steps of a fusion splicing method according to an embodiment.

### Description of Embodiments

As a method for confirming the position of a core in an end face of an optical fiber, there is a method in which the end face is observed by a camera. At this point, the focus position of the camera is aligned with the end face of the optical fiber. When the end face of the optical fiber is imaged with the focus position of the camera aligned with the end face, the outline of the core of the optical fiber in the captured image of the end face may become unclear. In particular, when foreign matter such as dust adheres to the end face, or when the end face has chipping or roughness, the outline of the core is likely to become unclear.

An object of the present disclosure is to provide a fusion splicer and a fusion splicing method capable of making the outline of a core in an image of an end face clear.

According to the present disclosure, the outline of the core in the image of the end face can be made clear.

### [Description of Embodiments of the Present Disclosure]

First, the contents of the embodiments of the present disclosure will be listed and described. (1) A fusion splicer according to one embodiment fusion-splices an optical fiber. The fusion splicer includes a light source that irradiates the optical fiber with light; a camera that receives the light, which passes through the optical fiber and is emitted from an end face of the optical fiber, to capture an image of the end face; and a core detection unit that detects a core of the optical fiber from the image of the end face captured by the camera. The camera captures an image of the end face with a focus position of the camera set at a portion of the optical fiber inward from the end face.

In the fusion splicer and the fusion splicing method described above, the light source causes the light to be incident on the optical fiber, and the light that is emitted from the light source and passes through the optical fiber is emitted from the end face of the optical fiber. The camera captures an image of the end face by receiving the light emitted from the end face of the optical fiber, and the core of the optical fiber is detected from the image of the end face. The camera captures an image of the end face with the focus position set at the portion of the optical fiber inward from the end face. The outline of the core in the captured image can be made clear by setting the focus position at the portion the optical fiber inward from the end face. The outline of the core can be made clear, thereby enabling the position of the core to be detected with high accuracy, which contributes to reducing optical loss occurring during fusion splicing.

(2) In (1) above, the fusion splicer may further include a drive unit that moves at least one of the optical fiber and the camera. The camera may capture an image of the end face with the focus position of the camera set at the end face of the optical fiber. When an outline of the core in the image of the end face is blurred, the drive unit may move at least one of the optical fiber and the camera to a position where the focus position of the camera is located at the portion inward from the end face. The camera may capture an image of the end face with the focus position set at the portion inward from the end face. In this case, when the camera images the end face of the optical fiber with the focus position set at the end face, and the outline of the core in the image of the end face is blurred, at least one of the optical fiber and the camera is moved to the position where the focus position of the camera is located at the portion inward from the end face. When the outline of the core in the image of the end face is blurred, the drive unit moves the optical fiber or the camera, thereby allowing the outline of the core to be clearly imaged with the focus position set at the portion inward from the end face.

(3) In (1) or (2) above, the fusion splicer may further include a drive unit that moves at least one of the optical fiber and the camera. The drive unit may set the focus position of the camera at the portion inward from the end face by moving at least one of the optical fiber and the camera by a distance determined in advance such that a distance from the optical fiber to the camera decreases. In this case, the drive unit moves at least one of the optical fiber and the camera by the distance determined in advance, thereby allowing the camera to clearly image the outline of the core with the focus position set at the portion inward from the end face.

(4) In (1) or (2) above, the fusion splicer may further include a drive unit that moves at least one of the optical fiber and the camera. The core detection unit may determine whether the outline of the core of the optical fiber in the image of the end face is clear. The drive unit may set the focus position of the camera at the portion inward from the end face by moving at least one of the optical fiber and the camera to a position where a distance from the optical fiber to the camera is decreased and the core detection unit determines that the outline of the core is clear. In this case, at least one of the optical fiber and the camera is moved to the position where the core detection unit determines that the outline of the core is clear, thereby allowing the outline of the core to be clearly imaged with the focus position set at the portion inward from the end face.

(5) A fusion splicing method according to one embodiment is a method for fusion-splicing an optical fiber. The fusion splicing method includes a step of irradiating the optical fiber with light using a light source; a step of capturing an image of an end face of the optical fiber using a camera by receiving, via the camera, the light that passes through the optical fiber and is emitted from the end face; and a step of detecting a core of the optical fiber from the image of the end face captured by the camera. In the step of capturing the image of the end face, the image of the end face is captured with a focus position of the camera set at a portion of the optical fiber inward from the end face.

### [Details of Embodiment of the Present Disclosure]

Specific examples of a fusion splicer and a fusion splicing method according to an embodiment of the present disclosure will be described. In the description of the drawings, the same or corresponding elements are denoted by the same reference signs, and duplicate descriptions will be omitted as appropriate. The drawings may be depicted in a partially simplified or exaggerated manner for ease of understanding, and dimensional ratios and the like are not limited to those illustrated in the drawings.

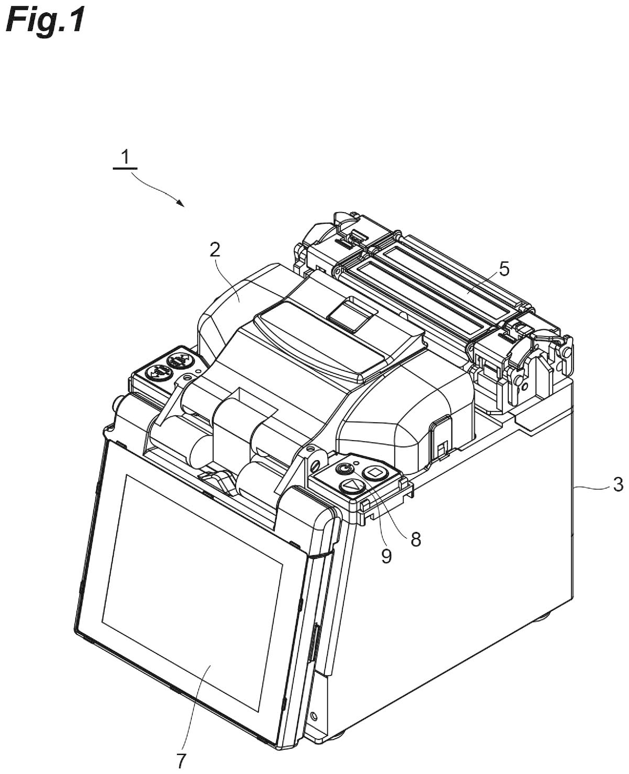

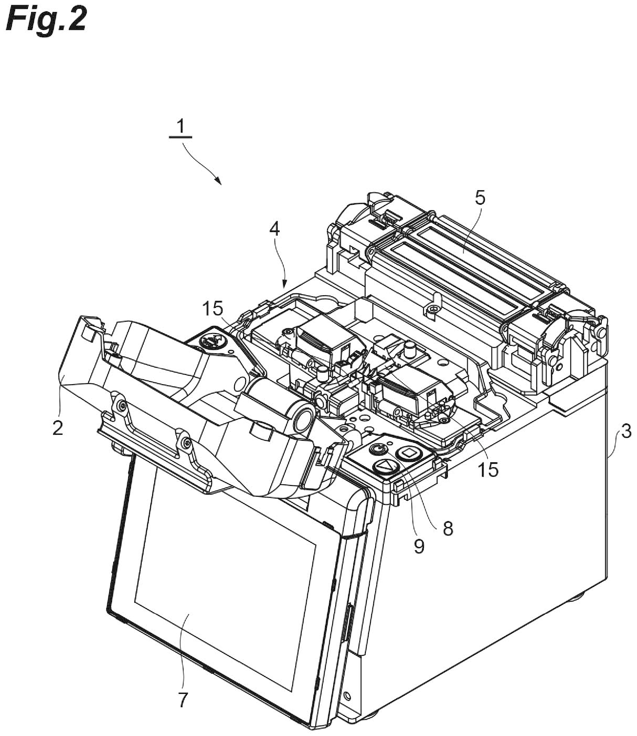

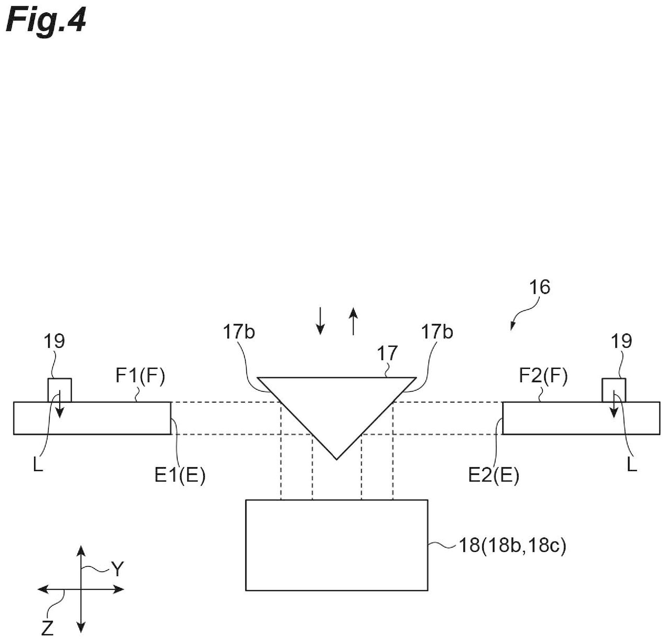

FIG. 1 is a perspective view illustrating a fusion splicer 1 according to an embodiment. The fusion splicer 1 includes a wind shield 2 at an upper portion thereof. FIG. 2 is a perspective view of the fusion splicer 1 with the wind shield 2 open. As illustrated in FIGS. 1 and 2, the fusion splicer 1 includes a housing 3 having a box shape. A fusion splicing unit 4 that fuses optical fibers and a heater 5 that heat-shrinks a fiber reinforcing sleeve placed over a spliced portion of the optical fibers fused in the fusion splicing unit 4 are provided on an upper portion of the housing 3. The wind shield 2 is provided to prevent wind from entering the fusion splicing unit 4. The fusion splicer 1 includes a monitor 7 that displays a fusion splicing state of the optical fibers imaged by a camera 18 (see FIG. 4) disposed inside the housing 3. The fusion splicer 1 includes a power switch 8 for switching on and off the power of the fusion splicer 1, and a splicing start switch 9 for performing fusion splicing of the optical fibers.

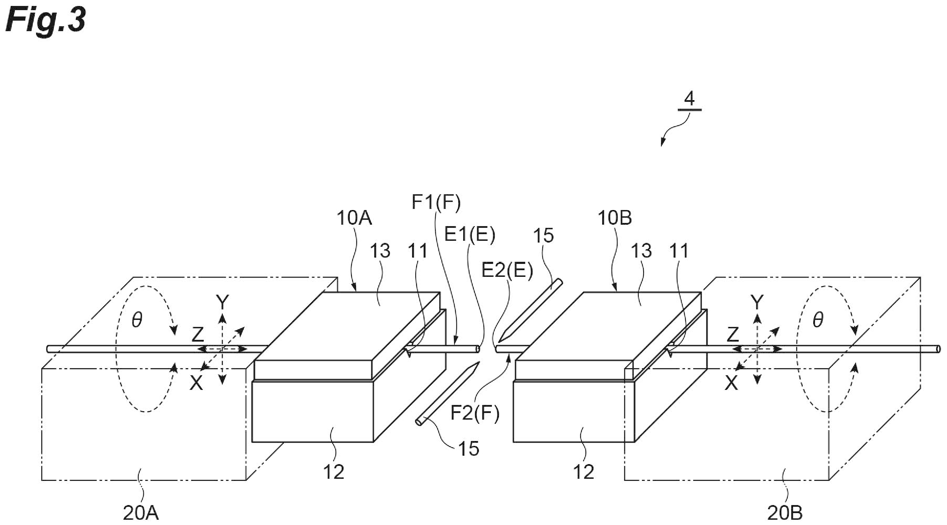

FIG. 3 is a perspective view schematically illustrating the fusion splicing unit 4. As illustrated in FIGS. 2 and 3, the fusion splicing unit 4 fusion-splices a first optical fiber F1 and a second optical fiber F2 to each other. The fusion splicing unit 4 includes a first optical fiber holder 10A for holding the first optical fiber F1; a second optical fiber holder 10B for holding the second optical fiber F2; a first rotation mechanism 20A that rotates the first optical fiber holder 10A; and a second rotation mechanism 20B that rotates the second optical fiber holder 10B. In the following description, unless it is necessary to distinguish between the first optical fiber F1 and the second optical fiber F2, the first optical fiber F1 and the second optical fiber F2 may be collectively referred to as an optical fiber F.

The first optical fiber F1 and the second optical fiber F2 are, for example, optical fibers that require rotational alignment in the fusion splicer 1. The first optical fiber F1 and the second optical fiber F2 are optical fibers, the positions of which in a θ-direction need to coincide with each other, the θ-direction being a direction about the Z-axis. For example, the first optical fiber F1 and the second optical fiber F2 are multicore fibers (MCFs) or polarization maintaining fibers (PMFs).

The fusion splicer 1 includes a pair of discharge electrodes 15. The pair of discharge electrodes 15 are disposed at a position where a first end face E1 of the first optical fiber F1 and a second end face E2 of the second optical fiber F2 face each other. The pair of discharge electrodes 15 fuse the first end face E1 of the first optical fiber F1 and the second end face E2 of the second optical fiber F2 to each other by discharge. In the following description, unless it is necessary to distinguish between the first end face E1 and the second end face E2, the first end face E1 and the second end face E2 may be collectively referred to as an end face E. The pair of discharge electrodes 15 are disposed at positions where the pair of discharge electrodes 15 face each other along a direction intersecting the first optical fiber F1 and the second optical fiber F2 (for example, the X-axis direction).

The first optical fiber holder 10A and the second optical fiber holder 10B are arranged along the Z-axis direction that is a direction in which the axis of the first optical fiber F1 extends. The first rotation mechanism 20A and the second rotation mechanism 20B are arranged along the Z-axis direction. Each of the first optical fiber holder 10A and the second optical fiber holder 10B includes a V-groove 11 in which the first optical fiber F1 or the second optical fiber F2 is placed. The first optical fiber F1 is positioned in the V-groove 11 of the first optical fiber holder 10A, and the second optical fiber F2 is positioned in the V-groove 11 of the second optical fiber holder 10B. Each of the first optical fiber holder 10A and the second optical fiber holder 10B includes a base 12 in which the V-groove 11 is formed, and a lid 13 placed on the base 12. For example, the base 12 and the lid 13 are disposed so as to be arranged along the Y-axis direction intersecting both the X-axis direction and the Z-axis direction.

The fusion splicer 1 includes an image observation mechanism for observing the first optical fiber F1 and the second optical fiber F2 disposed in the V-grooves 11. FIG. 4 is a diagram illustrating a configuration of an image observation mechanism 16 as one example. The image observation mechanism 16 includes, for example, a mirror 17 installed so as to be movable in the Y-axis direction; the camera 18 that captures an image of the end face E of the optical fiber F; and a light source 19 that irradiates the optical fiber F with light L from a side of the optical fiber F.

The mirror 17 has, for example, a triangular prism shape. The mirror 17 has an isosceles triangular cross-sectional shape in a YZ plane, and the mirror 17 extends in the X-axis direction. The mirror 17 has, for example, two reflective surfaces 17b inclined at 45 degrees with respect to both the Y-axis direction and the Z-axis direction. The mirror 17 is movable along the Y-axis direction at an intermediate position in the Z-axis direction with the central axis of the first optical fiber F1 coinciding with the central axis of the second optical fiber F2.

The image observation mechanism 16 includes the light source 19 that causes the light L to be incident on the first optical fiber F1, and the light source 19 that causes the light L to be incident on the second optical fiber F2. The light L incident on the first optical fiber F1 and the second optical fiber F2 from the respective light sources 19 is emitted from the first end face E1 and the second end face E2 facing each other. The light L emitted from the first end face E1 and the second end face E2 is reflected toward the camera 18 by the reflective surfaces 17b of the mirror 17. The camera 18 receives the light L that passes through the optical fiber F and is emitted from the end face E of the optical fiber F. The camera 18 observes each of the first end face E1 and the second end face E2 by receiving the light L that is reflected by the mirror 17 and travels along the Y-axis direction.

The camera 18 may include a first camera 18b for observing the end face of the first optical fiber F1 and a second camera 18c for observing the end face of the second optical fiber F2. The light source 19 that causes the light L to be incident on the optical fiber F from a side of the optical fiber F has been described above. However, instead of the light source 19, light may be incident on the optical fiber F from the respective opposite sides of the first end face E1 and the second end face E2 facing each other, and the light L may be incident on the optical fiber F by any method as long as the camera 18 can obtain an amount of the light L sufficient to observe the end face E.

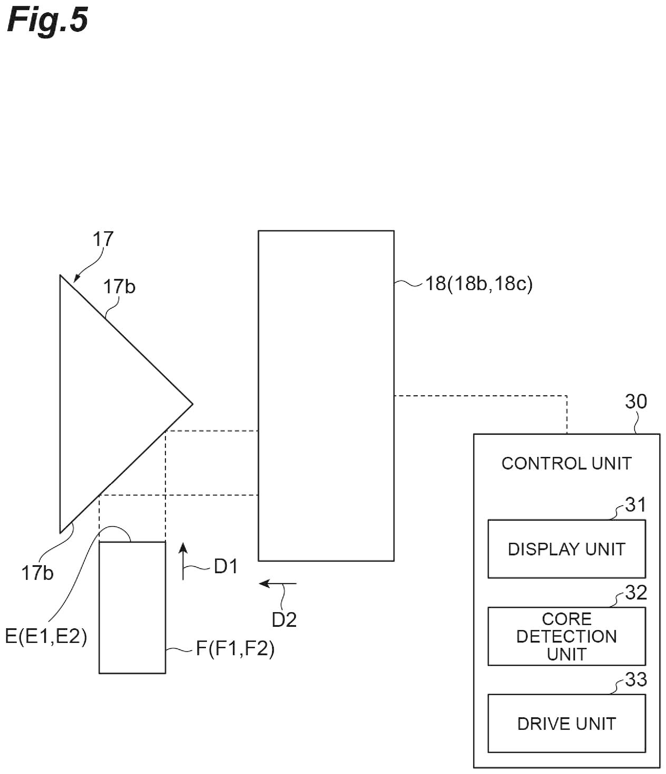

FIG. 5 is a diagram schematically illustrating a positional relationship among the mirror 17, the optical fiber F (the first optical fiber F1 or the second optical fiber F2), and the camera 18. As illustrated in FIG. 5, the fusion splicer 1 includes a control unit 30 that controls the operation of each part of the fusion splicer 1. The mirror 17 and the end face E of the optical fiber F, and the mirror 17 and the camera 18 are disposed so as to face each other. As described above, the camera 18 observes the end face E by receiving the light L emitted from the optical fiber F and reflected by the mirror 17. In the example above, the mirror 17 having the two reflective surfaces 17b has been described. However, instead of the mirror 17, a mirror having one reflective surface may be provided.

The camera 18 is, for example, a charge-coupled device camera (CCD camera) or a complementary metal oxide semiconductor camera (CMOS camera). The camera 18 images the optical fiber F (for example, the first optical fiber F1 and the second optical fiber F2), and the image of the optical fiber F captured by the camera 18 is transmitted to the control unit 30 of the fusion splicer 1 as image data.

The control unit 30 includes, for example, a central processing unit (CPU) composed of one or a plurality of integrated circuits (ICs). The functional elements (a display unit 31, a core detection unit 32, and a drive unit 33 which will be described later) of the control unit 30 are executed by the CPU. The control unit 30 acquires, for example, an imaging result of the optical fiber F from the camera 18, and stores the imaging result of the optical fiber F. The control unit 30 includes, for example, the display unit 31, the core detection unit 32, and the drive unit 33. The display unit 31 displays an image of the end face E of the optical fiber F, which is captured by the camera 18, on the monitor 7.

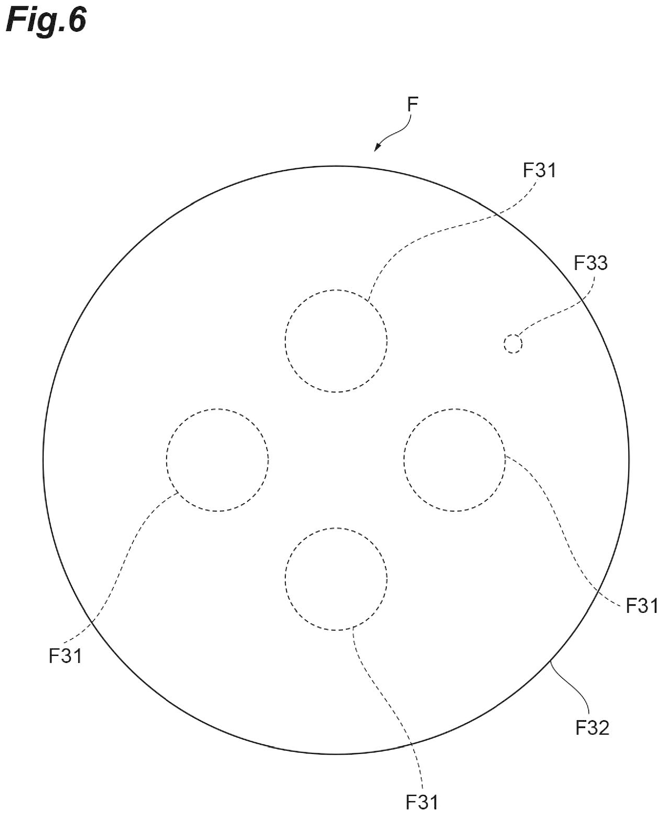

As illustrated in FIG. 6, the optical fiber F has, for example, cores F31, a cladding F32 surrounding the cores F31, and a marker F33. The display unit 31 displays the image of the end face E such that the rotational state of the optical fiber F can be recognized based on the marker F33. The core detection unit 32 detects each of the cores F31 of the optical fiber F from the image of the end face E captured by the camera 18. In the present embodiment, the core detection unit 32 determines whether a portion is the core F31, based on the image data of the end face E, and specifies the center position of the core F31. For example, the core detection unit 32 calculates the outline of the core F31 and the center position of the core F31 from the luminance information of the image of the end face E. The core detection unit 32 may determine whether the outline of the core F31 in the image of the end face E is clear.

FIG. 6 is a diagram schematically illustrating a state in which the outline of the core F31 in the image of the end face E is blurred. As illustrated in FIG. 6, when the end face E is imaged with the focus position of the camera 18 aligned with the end face E, the outlines of the core F31 and the marker F33 in the image of the end face E may become unclear. In contrast, in the present embodiment, the camera 18 captures an image of the end face E with the focus position of the camera 18 set at a portion of the optical fiber F inward from the end face E.

As illustrated in FIG. 5, the drive unit 33 moves at least one of the optical fiber F and the camera 18. For example, the drive unit 33 moves the optical fiber F in a direction D1 in which the optical fiber F approaches the mirror 17. At this time, the drive unit 33 may move the first optical fiber holder 10A (or the second optical fiber holder 10B), which holds the optical fiber F, in the direction D1. The drive unit 33 may move the camera 18 in a direction D2 in which the camera 18 approaches the mirror 17.

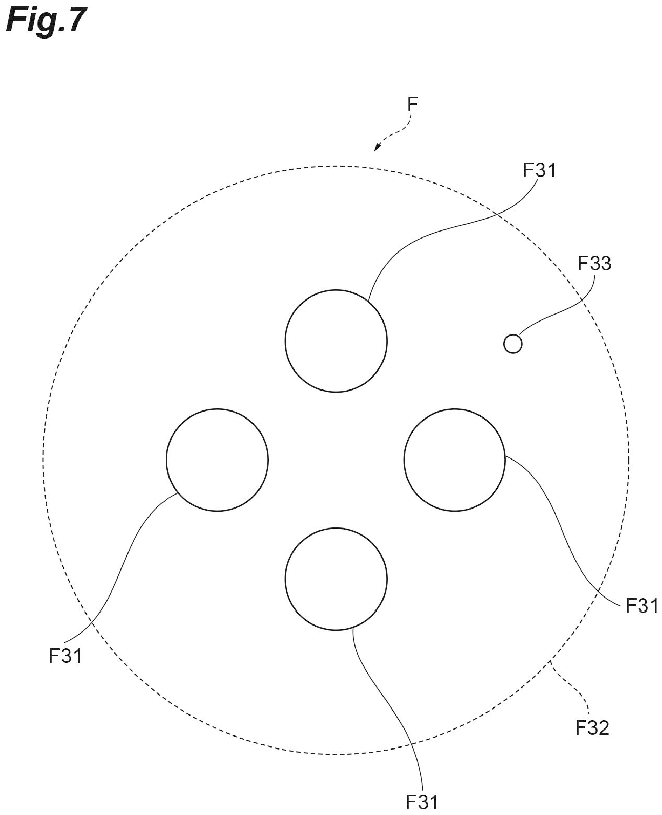

The movement of the optical fiber F in the direction D1 and the movement of the camera 18 in the direction D2 shorten the optical path length of the light L from the end face E to the camera 18, thereby setting the focus position of the camera 18 at a portion inward from the end face E. That is, the optical path length of the light L from the end face E to the camera 18 is set to be shorter than the distance (focal length) from the focus position of the camera 18 to the camera 18. Accordingly, even if the outlines of the core F31 and the marker F33 are blurred as illustrated in FIG. 6, the outlines of the core F31 and the marker F33 can be made clear as illustrated in FIG. 7.

As described above, the drive unit 33 moves at least one of the optical fiber F and the camera 18 such that the optical path length of the light L from the optical fiber F to the camera 18 is shortened. The drive unit 33 may store in advance a focus position of the camera 18 at which the outlines of the core F31 and the marker F33 become clear, and may move the optical fiber F or the camera 18 such that the focus position of the camera 18 is the focus position stored in advance. The drive unit 33 may move the optical fiber F or the camera 18 by a distance determined in advance.

The amount of movement of the optical fiber F in the direction D1 or the amount of movement of the camera 18 in the direction D2 may be, for example, greater than 0 µm and 100 µm or less. For example, the amount of movement of the optical fiber F in the direction D1 or the amount of movement of the camera 18 in the direction D2 is 5 µm or more and 50 µm or less.

The drive unit 33 may not store in advance the focus position of the camera 18 at which the outlines of the core F31 and the marker F33 become clear. In this case, the detection of the core F31 by the core detection unit 32 and the movement of the optical fiber F or the camera 18 by the drive unit 33 may be repeated, and the drive unit 33 may move the optical fiber F or the camera 18 until the core detection unit 32 determines that the outline of the core F31 are clear.

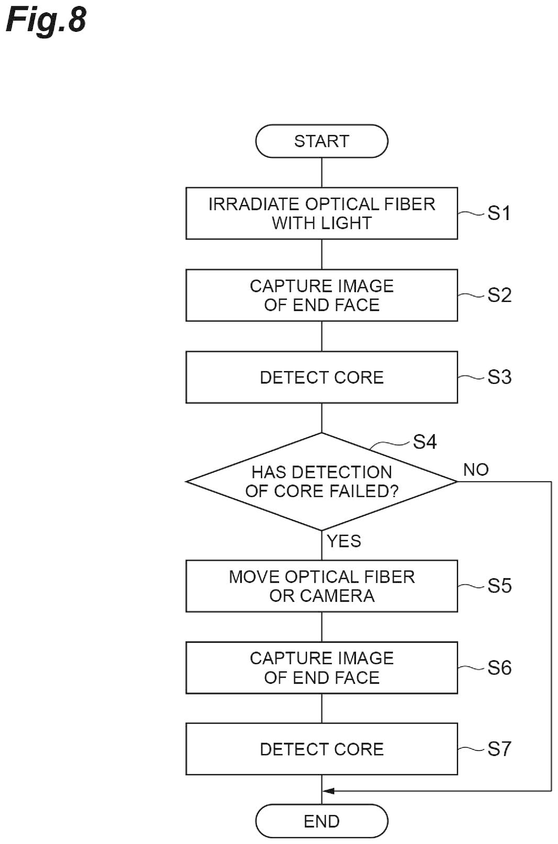

Next, an example of the fusion splicing method according to the present embodiment will be described with reference to the flowchart in FIG. 8. First, the light source 19 irradiates the optical fiber F with the light L (a step of performing light irradiation, step S1). The light L incident on the optical fiber F passes through the optical fiber F, and is emitted from the end face E. The light L emitted from the end face E is reflected toward the camera 18 by the mirror 17, and reaches the camera 18.

The camera 18 receives the light L emitted from the end face E to capture an image of the end face E (a step of capturing an image of an end face, step S2). The core detection unit 32 detects the core F31 of the optical fiber F from the image of the end face E captured by the camera 18 (a step of detecting a core, step S3). For example, the core detection unit 32 detects the marker F33 of the optical fiber F together with the core F31. Accordingly, a misalignment of the optical fiber F in a rotation direction (θ-direction) can be identified.

In step S4, when the core detection unit 32 succeeds in detecting the core F31, for example, rotational alignment of the first optical fiber F1 and the second optical fiber F2 is performed, and then the first optical fiber F1 and the second optical fiber F2 are fusion-spliced by discharge heating. Thereafter, the series of steps of the fusion splicing method according to the present embodiment are completed. On the other hand, in step S4, when it is determined that detection of the core F31 is difficult (when detection of the core F31 fails), the drive unit 33 moves at least one of the optical fiber F and the camera 18 (a step of moving, step S5). At this time, at least one of the optical fiber F and the camera 18 is moved to a position where the focus position of the camera 18 is located at a portion inward from the end face E.

The camera 18 captures an image of the end face E with the focus position set at the portion inward from the end face E (a step of capturing an image of an end face, step S6). Then, detection of the core F31 is performed by the core detection unit 32 (a step of detecting a core, step S7), and for example, rotational alignment of the first optical fiber F1 and the second optical fiber F2 is performed, and then the first optical fiber F1 and the second optical fiber F2 are fusion-spliced by discharge heating. Thereafter, the series of steps of the fusion splicing method according to the present embodiment are completed.

Next, effects obtained from the fusion splicer 1 and the fusion splicing method according to the present embodiment will be described. In the fusion splicer 1 and the fusion splicing method according to the present embodiment, the light source 19 causes the light L to be incident on the optical fiber F, and the light L that is emitted from the light source 19 and passes through the optical fiber F is emitted from the end face E of the optical fiber F. The camera 18 captures an image of the end face E by receiving the light L emitted from the end face E of the optical fiber F, and the core F31 of the optical fiber F is detected from the image of the end face E. The camera 18 captures an image of the end face E with the focus position of the camera 18 set at a portion of the optical fiber F inward from the end face E. The outline of the core F31 in the captured image can be made clear by setting the focus position at the portion of the optical fiber F inward from the end face E. The outline of the core F31 can be made clear, thereby enabling the position of the core F31 to be detected with high accuracy, which contributes to reducing optical loss associated with fusion splicing. In the present embodiment, since the position of the marker F33 can be detected with high accuracy together with the position of the core F31, the position of the optical fiber F in the rotation direction can be identified with high accuracy.

As described above, the fusion splicer 1 may include the drive unit 33 that moves at least one of the optical fiber F and the camera 18. The camera 18 may capture an image of the end face E with the focus position of the camera 18 set at the end face E of the optical fiber F. When the outline of the core F31 in the image of the end face E is blurred, the drive unit 33 may move at least one of the optical fiber F and the camera 18 to the position where the focus position of the camera 18 is located at the portion inward from the end face E. Thereafter, the camera 18 may capture an image of the end face E with the focus position set at the portion inward from the end face E. In this case, when the camera 18 images the end face E of the optical fiber F with the focus position set at the end face E, and the outline of the core in the image of the end face E is blurred, at least one of the optical fiber F and the camera 18 is moved to the position where the focus position of the camera 18 is located at the portion inward from the end face E. When the outline of the core in the image of the end face E is blurred, the drive unit 33 moves the optical fiber F or the camera 18, thereby allowing the outline of the core F31 to be clearly imaged with the focus position set at the portion inward from the end face E.

As described above, the drive unit 33 may set the focus position of the camera 18 at the portion inward from the end face E by moving at least one of the optical fiber F and the camera 18 by a distance determined in advance such that the distance from the optical fiber F to the camera 18 decreases. In this case, the drive unit 33 moves at least one of the optical fiber F and the camera 18 by the distance determined in advance, thereby allowing the camera 18 to clearly image the outline of the core F31 with the focus position set at the portion inward from the end face E.

As described above, the core detection unit 32 may determine whether the outline of the core F31 of the optical fiber F in the image of the end face E is clear. The drive unit 33 may set the focus position of the camera 18 at the portion inward from the end face E by moving at least one of the optical fiber F and the camera 18 to a position where the distance from the optical fiber F to the camera 18 is decreased and the core detection unit 32 determines that the outline of the core F31 is clear. In this case, at least one of the optical fiber F and the camera 18 is moved to the position where the core detection unit 32 determines that the outline of the core F31 is clear, thereby allowing the outline of the core F31 to be clearly imaged with the focus position set at the portion inward from the end face E.

The embodiments of the fusion splicer and the fusion splicing method according to the present disclosure have been described above. However, the present invention is not limited to the embodiments described above. It will be easily understood by those skilled in the art that various modifications and changes can be made to the present invention within the scope of the concept described in the claims. That is, the shapes, sizes, numbers, materials, and modes of disposition of the respective parts of the fusion splicer, as well as the contents and order of the steps of the fusion splicing method can be changed as appropriate within the scope of the concept.

### Reference Signs List

1: fusion splicer, 2: wind shield, 3: housing, 4: fusion splicing unit, 5: heater, 7: monitor, 8: power switch, 9: splicing start switch, 10A: first optical fiber holder, 10B: second optical fiber holder, 11: V-groove, 12: base, 13: lid, 15: discharge electrode, 16: image observation mechanism, 17: mirror, 17b: reflective surface, 18: camera, 18b: first camera, 18c: second camera, 19: light source, 20A: first rotation mechanism, 20B: second rotation mechanism, 30: control unit, 31: display unit, 32: core detection unit, 33: drive unit, E: end face, E1: first end face, E2: second end face, F: optical fiber, F1: first optical fiber, F2: second optical fiber, F31: core, F32: cladding, F33: marker, L: light.

## Claims

1. A fusion splicer that fusion-splices an optical fiber, the fusion splicer comprising:
a light source that irradiates the optical fiber with light;
a camera that receives the light, which passes through the optical fiber and is emitted from an end face of the optical fiber, to capture an image of the end face; and
a core detection unit that detects a core of the optical fiber from the image of the end face captured by the camera,
wherein the camera captures an image of the end face with a focus position of the camera set at a portion of the optical fiber inward from the end face.

2. The fusion splicer according to claim 1, further comprising:
a drive unit that moves at least one of the optical fiber and the camera,
wherein the camera captures an image of the end face with the focus position of the camera set at the end face of the optical fiber,
when an outline of the core in the image of the end face is blurred, the drive unit moves at least one of the optical fiber and the camera to a position where the focus position of the camera is located at the portion inward from the end face, and
the camera captures an image of the end face with the focus position set at the portion inward from the end face.

3. The fusion splicer according to claim 1 or 2, further comprising:
a drive unit that moves at least one of the optical fiber and the camera,
wherein the drive unit sets the focus position of the camera to the portion inward from the end face by moving at least one of the optical fiber and the camera by a distance determined in advance such that a distance from the optical fiber to the camera decreases.

4. The fusion splicer according to claim 1 or 2, further comprising:
a drive unit that moves at least one of the optical fiber and the camera,
wherein the core detection unit determines whether the outline of the core of the optical fiber in the image of the end face is clear, and
the drive unit sets the focus position of the camera to the portion inward from the end face by moving at least one of the optical fiber and the camera to a position where a distance from the optical fiber to the camera is decreased and the core detection unit determines that the outline of the core is clear.

5. A fusion splicing method for fusion-splicing an optical fiber, the method comprising:
a step of irradiating the optical fiber with light using a light source;
a step of capturing an image of an end face of the optical fiber using a camera by receiving, via the camera, the light that passes through the optical fiber and is emitted from the end face; and
a step of detecting a core of the optical fiber from the image of the end face captured by the camera,
wherein in the step of capturing the image of the end face, the image of the end face is captured with a focus position of the camera set at a portion of the optical fiber inward from the end face.
